# EUROPÄISCHE PATENTSCHRIFT

(11) **EP 2 865 551 B1**
(45) Veröffentlichungstag und Bekanntmachung des Hinweises auf die Patenterteilung: **09.10.2019**
(21) Anmeldenummer: 14001701.3
(22) Anmeldetag: 14.05.2014
(51) Int. Cl.: B60K 6/405, B60K 6/485, B60K 6/26

(54) **Antriebsstrangmodul für ein Kraftfahrzeug und Montage- und Demontageverfahren für ein Antriebsstrangmodul**
Power transmission module for a motor vehicle and method of assembling and disassembling a power transmission module
Module de chaîne cinématique pour un véhicule automobile et procédé de montage et de démontage d'un module de chaîne cinématique

(30) Priorität: 24.10.2013 DE 102013017579
(43) Veröffentlichungstag der Anmeldung: 29.04.2015
(60) Teilanmeldung: 19190995.1
(73) Patentinhaber: MAN Truck & Bus SE, 80995 München (DE)
(72) Erfinder: Golka, Markus, 90402 Nürnberg (DE)
(74) Vertreter: v. Bezold & Partner Patentanwälte - PartG mbB

(56) Entgegenhaltungen:
- EP-B1- 1 459 424
- DE-A1-102012 003 386
- US-B1- 6 204 577

## Beschreibung

Die Erfindung betrifft ein Antriebsstrangmodul für ein Kraftfahrzeug, insbesondere eine Anordnung aus einem Schwungrad und einem Kurbelwellen-Startergenerator. Die Erfindung betrifft ferner ein Montageverfahren und ein Demontageverfahren für ein derartiges Antriebsstrangmodul.

Um die erste Gemischbildung, Zündung und Verbrennung in einem Verbrennungsmotor zu ermöglichen, werden Verbrennungsmotoren durch eine äußere Kraftquelle auf eine vorgegebene Mindestdrehzahl gebracht. Hierfür sind aus dem Stand der Technik Antriebsstrangmodule bekannt, bei denen elektrische Kurbelwellen-Startergeneratoren (KSG) zwischen Motor und Getriebe vorgesehen sind. Dies sind auf der Kurbelwelle sitzende elektrische Maschinen mit Starter- und Generatorfunktion, die gemeinhin als Kurbelwellen-Startergeneratoren bezeichnet werden, wegen der direkten Anbindung ihres Rotors mit der Kurbelwelle der Brennkraftmaschine. Die elektrischen Kurbelwellen-Startergeneratoren haben den Vorteil, dass die Übertragung der mechanischen Starterenergie berührungslos und somit verschleißfrei und geräuscharm erfolgt.

Der KSG-Rotor ist mit dem auf dem getriebeseitigen Ende der Kurbelwelle angeordneten Schwungrad verbunden. Auf diese Weise steht er in Wirkverbindung mit der Kurbelwelle. Der KSG-Stator ist auf der Innenseite eines den Rotor umhausenden Gehäuses, nachfolgend auch als KSG-Gehäuse bezeichnet, ortsfest angeordnet. Der Rotor bzw. der Rotorträger ist mit einem abtriebsseitigen Getriebe über ein Adapterelement, beispielsweise einer sogenannten Flexplatte, verbunden. Diese Verbindung erfolgt typischerweise durch Verschrauben des Adapterelements mit dem Getriebe.

Bei der Erstmontage von Getriebe, Kurbelwellen-Startergenerator, Schwungrad und Motor im Werk ist in der Regel genügend axialer Freiraum vorhanden, um die Komponenten zu montieren und eine gute Werkzeugzugänglichkeit zu ermöglichen. Im Servicefall, beispielsweise bei Defekt des Getriebes, ist der zur Verfügung stehende Ausbauraum jedoch wesentlicher geringer als bei der Erstmontage, so dass die Werkzeugzugänglichkeit eingeschränkt ist. Bei den aus dem Stand der Technik bekannten Antriebsstranganordnungen ist es daher in der Regel zum Austausch eines defekten Getriebes notwendig, die Komponenten der Antriebsstranganordnung zu demontieren. Dies betrifft insbesondere das Schwungrad und den Kurbelwellenstartergenerator, deren Verbindung gelöst werden muss, damit diese Komponenten abgenommen werden können, um einen Zugang zu einem Adapterverbindungselement, beispielsweise einer Flexplatte, zu erhalten, mittels derer der Rotor an das Getriebe montiert ist.

Ein weiterer Nachteil der aus dem Stand der Technik bekannten Getriebeanordnungen ist, dass aufgrund der hohen Masse und des langen Hebelarms der Baugruppen das Risiko einer Beschädigung von Getriebewandlern und Flexplatten besteht, da der eingeschränkte Bauraum eine sichere Abstützung der einzelnen Baugruppen bei der Demontage verhindert oder zumindest erschwert.

Aus der EP 1 459 424 B1 ist ein Antriebsstrang für ein Kraftfahrzeug bekannt, umfassend einen Kurbelwellenstartergenerator, der einen Rotor aufweist, der am Schwungrad befestigt ist und auf einem becherförmigen Element, das sich vom Schwungrad wegerstreckt, gehaltert ist.

Es ist somit eine Aufgabe der Erfindung, die vorgenannten Nachteile der aus dem Stand der Technik bekannten Antriebsstrangmodule und Montage- bzw. Demontageverfahren zu vermeiden. Es ist insbesondere eine Aufgabe der Erfindung, ein Antriebsstrangmodul und ein Montage- bzw. Demontageverfahren bereitzustellen, das eine sichere Abstützung der Baugruppen bei der Montage und Demontage und eine verbesserte Werkzeugzugänglichkeit ermöglicht.

Diese Aufgaben werden durch ein Antriebsstrangmodul für ein Kraftfahrzeug und durch ein Montage- bzw. Demontageverfahren für ein solches Antriebsstrangmodul mit den Merkmalen der unabhängigen Ansprüche gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Erfindungsgemäß wird ein Antriebsstrangmodul für ein Kraftfahrzeug, insbesondere für ein Nutzfahrzeug, vorgeschlagen, umfassend ein Schwungrad mit einem Schwungradgehäuse und einem Kurbelwellen-Startergenerator, der antriebsseitig an dem Schwungradgehäuse und abtriebsseitig an einem Getriebe ortsfest anordenbar ist, d. h. angeordnet werden kann. Der Kurbelwellen-Startergenerator umfasst einen Stator und einen Rotor, wobei der Rotor mit dem Schwungrad lösbar drehfest koppelbar ist.

Die Erfindung betrifft also eine an sich aus dem Stand der Technik bekannte Anordnung aus einem Kurbelwellen-Startergenerator und einem Schwungrad, die zwischen Motor und Getriebe installiert sind. Der Rotor des Generators ist im montierten Zustand auf dem getriebeseitigen Ende mit dem auf der Kurbelwelle angeordneten Schwungrad verbunden, so dass er in Wirkverbindung mit der Kurbelwelle steht. Der Stator und Rotor des Kurbelwellen-Startergenerators wird von einem Kurbelwellen-Startergenerator-Gehäuse (nachfolgend auch als KSG-Gehäuse bezeichnet) umhaust.

Die Erfindung umfasst die allgemeine technische Lehre, dass am Schwungrad eine sich abtriebsseitig in axialer Richtung erstreckende Abstützeinrichtung befestigt ist, entlang derer der Rotor in axialer Richtung verschiebbar ist, wenn der Rotor von dem Schwungrad gelöst ist. Ein besonderer Vorzug der Erfindung liegt somit darin, dass eine erste antriebsseitige Baugruppe, umfassend das Schwungrad, das Schwungradgehäuse, das KSG-Gehäuse und den Stator, von einer zweiten abtriebsseitigen Baugruppe, umfassend den Rotor und das über ein Adapterverbindungselement an dem Rotor befestigtes Getriebe, voneinander gelöst werden können, wobei durch die erfindungsgemäße Abstützeinrichtung eine teleskopartige Verschiebung der beiden Baugruppen relativ zueinander in axialer Richtung ermöglicht wird, unter gleichzeitiger Abstützung der beiden Baugruppen. Dadurch kann ein unkontrolliertes Absacken einer der Baugruppen und eine Beschädigung eines oder mehrerer Bauteile, wie beispielsweise des Getriebewandlers oder der Flexplatte, vermieden werden. Hierbei ist die axiale Richtung die Richtung der Drehachse des Rotors und des Schwungrads.

Vorzugsweise ist die Abstützeinrichtung so ausgebildet, dass der Rotorträger auf diese aufgesteckt werden kann, so dass die Rotorzähne die Abstützeinrichtung in radialer Richtung umgeben.

In einem nicht beanspruchten Beispiel umfasst die Abstützeinrichtung eine zylindermantelförmige Stützfläche, auf der der Rotor in axialer Richtung beweglich geführt ist. Gemäß dieser Variante umfasst der Rotorträger ebenfalls einen hohlzylinderförmigen Abschnitt mit leicht größerem Durchmesser als der entsprechende Abschnitt der Abstützeinrichtung, so dass der Rotorträger auf die Abstützeinrichtung aufgeschoben werden kann.

Erfindungsgemäß enthält die Abstützeinrichtung sich in axialer Richtung erstreckende stabförmige Führungselemente zur Abstützung des Rotors, entlang derer der Rotor in axialer Richtung verschiebbar ist. Die stabförmigen Führungselemente können beispielsweise als Schrauben, Stifte und/oder Stege ausgebildet sein. In der Ausführungsvariante, bei der Schrauben als stabförmige Führungselemente vorgesehen sind, sind diese vorzugsweise umhülst, so dass der Rotor auf der Schraubenhülse geführt ist.

Das stabförmige Führungselement, insbesondere die Schraubenhülse, kann einen Bund aufweisen, der als Sicherung dient und verhindert, dass beim Auseinanderziehen von Rotor und Rotorträger diese nicht von dem stabförmigen Führungselement herunterfallen können.

Bei einer vorteilhaften Variante der oben genannten Ausführungsformen sind mehrere der stabförmigen Führungselemente in axialer Richtung entlang der inneren Umfangsseite des Rotors verteilt angeordnet, um eine stabile Führung des Rotors zu ermöglichen. Besonders vorteilhaft ist, wenn mindestens vier oder mindestens fünf Stege, Schrauben und/oder Stifte vorgesehen sind, auf denen der Rotorträger abgestützt und beweglich geführt ist.

Vorzugsweise umfasst der Rotor einen Rotorträger, auf dem die Rotorzähne umfangsseitig angeordnet sind, so dass der Rotor mittels des Rotorträgers auf der Abstützeinrichtung beweglich geführt ist, auf dem umfangsseitig die Rotorzähne ange ordnet sind, so dass der Rotor mittels des Rotorträgers auf der Abstützeinrichtung befestigt ist. Mit anderen Worten ist der Rotorträger auf die Abstützeinrichtung aufgesteckt.

Gemäß einem Ausführungsbeispiel umfasst das Antriebsstrangmodul ein Adapterverbindungsmittel, über das der Kurbelwellen-Startergenerator mit dem Getriebe verschraubbar ist. Durch geeignete Wahl des Adapterverbindungsmittels können Kurbelwellen-Startergeneratoren und Getriebe in jeweils verschiedenen konstruktiven Ausführungen miteinander verbunden werden. Hierbei weist das Gehäuse des Kurbelwellen-Startergenerators vorzugsweise eine Öffnung, z. B. einen Durchbruch, auf, über die ein Werkzeug zur Betätigung der Befestigungsmittel, mittels derer das Adapterverbindungsmittel mit dem Getriebe verbunden ist, in das Gehäuse des Kurbelwellen-Startergenerators einführbar ist.

In einem bevorzugten Ausführungsbeispiel ist das Befestigungsmittel wie bei einem bekannten Antriebsstrangmodul durch Schrauben gebildet, um das Adapterverbindungsmittel mit dem Getriebe zu verschrauben. In diesem Fall ist das Werkzeug ein Schraubwerkzeug.

Eine derartige Öffnung hat den besonderen Vorteil, dass die Verbindung zwischen Rotor bzw. dem Adapterverbindungsmittel und dem Getriebe gelöst werden kann, ohne dass eine Demontage des Schwungrads erforderlich ist, um einen axialen Zugang zu dem Befestigungsmittel bereitzustellen. Vielmehr ermöglicht die bewegliche Lagerung des Rotors auf der Abstützeinrichtung eine sichere relative Verschiebung zwischen Rotor und der das Schwungrad und das KSG-Gehäuse mit dem Stator umfassenden Baugruppe, so dass der zur Verfügung stehende Handhabungsraum vergrößert wird. Dieser Handhabungsraum kann dann durch Einbringung eines Schraubwerkzeugs durch die Öffnung entsprechend genutzt werden, um das Getriebe zu demontieren.

Gemäß einer besonders vorteilhaften Variante dieser Ausführungsform ist der Stator ortsfest an der Innenseite des Gehäuses angeordnet, und die Öffnung in dem KSG-Gehäuse ist in der vom Schwungrad entgegengesetzten Richtung versetzt vom Stator vorgesehen. Hierbei ist durch ein Verschieben des Rotors in axialer Richtung auf der Abstützeinrichtung relativ zum Schwungrad wenigstens einer der Zähne des Rotors bzw. einer der Zahnlücken des Rotors unterhalb der Öffnung positionierbar. Hierbei wird der Rotor bzw. das Getriebe so gedreht, dass eine Zahnlücke des Rotors direkt unterhalb der Öffnung angeordnet ist, so dass das Werkzeug über die Öffnung im KSG-Gehäuse in die Zahnlücke einfahren kann und so direkt gegenüberliegend dem Verbindungsmittel bzw. der Schraube, mit der das Adapterverbindungsmittel am Getriebe befestigt ist, betätigt werden kann.

Das Adapterverbindungsmittel kann ein scheibenförmiges Verbindungsmittel, insbesondere eine Flexplatte (engl. flex plate) oder eine starre Platte sein. Es können aber beliebige, aus dem Stand der Technik bekannte Adapterelemente, beispielsweise tellerförmige Adapterelemente, verwendet werden, um ein bestimmtes KSG-Gehäuse mit einer bestimmten konstruktiven Ausführung eines Getriebes zu verbinden.

In einer weiteren Variante der Erfindung kann ein sich in axialer Richtung erstreckender Teil der Abstützeinrichtung an einem dem Schwungrad abgewandten Endbereich einen größeren Durchmesser aufweisen als in einem sich anschließenden mittleren Bereich. Der sich in axialer Richtung erstreckende Abschnitt der Abstützeinrichtung kann somit eine Verjüngung aufweisen, um ein Verkanten des Rotorträgers zu verhindern.Die Durchmesser werden vorzugsweise so gewählt, dass beim Verschieben des Rotors auf der Abstützeinrichtung relativ zum Stator dieser nicht mit dem Stator kollidiert.

Eine Möglichkeit der erfindungsgemäßen Realisierung sieht vor, dass die Abstützeinrichtung hierzu an einem dem Schwungrad abgewandten Endbereich einen Vorsprung bzw. Kante in Richtung des Rotors aufweist. Der Vorsprung ist vorzugsweise so ausgeführt, dass er eine punktuelle Auflage oder eine Linienberührung zwischen Rotor bzw. Rotorträger und der Abstützeinrichtung ermöglicht. Ein weiterer Vorteil ist, dass durch die unterschiedlichen Durchmesser der Reibwiderstand beim Aufschieben verringert wird.

Gemäß einer weiteren Variante kann ein sich in axialer Richtung erstreckender Teil der Abstützeinrichtung an einem dem Schwungrad zugewandten Endbereich eine Schräge mit einer anschließenden Passfläche aufweisen, so dass ein auf die Passfläche aufgeschobener Rotor einen vorbestimmten Abstand zu einem Stator einnimmt.

Mit anderen Worten wird der Rotorträger über die Schräge auf eine Passfläche geführt. Die Passfläche dient dann zur genauen Einhaltung des Abstandes zwischen Rotor und Stator. So kann einerseits eine Beweglichkeit zwischen Rotor und Stator in Axialrichtung während eines Montagevorgangs ermöglicht werden und gleichzeitig sichergestellt werden, dass eine präzise Ausrichtung bzw. ein genau vorbestimmter Abstand zwischen Rotor und Stator wieder hergestellt wird.

Gemäß einem weiteren Aspekt wird ein Montageverfahren für ein Antriebsstrangmodul gemäß einem der vorstehend beschriebenen Aspekte bereitgestellt. Das Montageverfahren umfasst die Schritte: Montieren einer ersten Baugruppe, umfassend den Rotor, den Rotorträger, ein Adapterverbindungsmittel und ein Getriebe, wobei der Rotorträger über das Adapterverbindungsmittel ortsfest am Getriebe angeordnet wird. Das Verfahren umfasst ferner den Schritt des Montierens einer zweiten Baugruppe, umfassend das Kurbelwellen-Generatorgehäuse, den Stator, das Schwungrad und das Schwungradgehäuse, die an einen Motor montiert werden. Nach der separaten Vormontage der ersten und zweiten Baugruppe werden diese zusammengeführt, wobei der Rotorträger auf der Abstützeinrichtung in Richtung des Schwungradsgehäuses verschoben wird und anschließend über eine rückseitige Öffnung im Schwungradgehäuse das Schwungrad am Rotorträger befestigt, vorzugsweise verschraubt wird.

Die Abstützeinrichtung dient hierbei als Abstütz-, Führungs- und Positionierungsmittel, um den Rotor in einer vorbestimmten Stellung zum Stator zu positionieren. Das Vorsehen der erfindungsgemäßen Abstützeinrichtung ermöglicht somit das sichere und positionsgenaue Zusammenführen der beiden vormontierten Baugruppen. Das genannte Montageverfahren betrifft den erstmaligen Zusammenbau des Antriebsstrangmoduls.

Gemäß der vorliegenden Erfindung wird ein besonders vorteilhaftes Demontageverfahren ermöglicht, mit dem im Servicefall das Getriebe von dem Antriebsstrangmodul gelöst und entfernt werden kann. Dieses Demontageverfahren umfasst die Schritte: Lösen der Verbindung, insbesondere der Verschraubung von Rotorträger und dem Schwungrad; Auseinanderziehen von Rotor und Schwungrad durch Verschieben des Rotors bzw. des Rotorträgers in axialer Richtung auf der Abstützeinrichtung in einen Zustand, bei dem der Rotor versetzt von dem Stator auf der Abstützeinrichtung gelagert ist. Das Demontageverfahren umfasst ferner die Schritte Einbringen eines Werkzeugs durch eine Öffnung im Gehäuse des Kurbelwellen-Startergenerators und Verdrehen des Rotors oder des Getriebes, um Befestigungsmittel, mittels derer das Adapterverbindungsmittel am Getriebe befestigt ist, am Werkzeug zu positionieren.

Das Verfahren umfasst ferner das Lösen der positionierten Befestigungsmittel und das Entfernen des Getriebes. Die Befestigungsmittel, mit denen das Getriebe an dem Adapterverbindungsmittel, beispielsweise einer Flexplatte, befestigt ist, sind vorzugsweise Schrauben.

Ein besonderer Vorzug der Erfindung liegt somit darin, dass zur Demontage des Getriebes kein Entfernen des Schwungrads und des Schwungradgehäuses und/oder des Kurbelwellenstartergenerators erforderlich ist, um an die Befestigungsmittel, beispielsweise die Schrauben, zu gelangen, mit denen das Getriebe an dem Verbindungsadapterelement des Rotors befestigt ist. Vielmehr kann durch die erfindungsgemäße axiale Lagerung und Verschiebbarkeit des Rotors entlang der Abstützeinrichtung ein zusätzlicher Handhabungsraum geschaffen werden, wobei gleichzeitig sichergestellt wird, dass die schweren Bauteile durch die Abstützeinrichtung abgestützt und geführt werden und nicht unkontrolliert absacken können. Durch die axiale Verschiebbarkeit können insbesondere die Rotorzähne versetzt von dem Stator positioniert werden und vorzugsweise über eine Öffnung oder einen Durchbruch im Gehäuse zugänglich gemacht werden, so dass ein Schraubwerkzeug zwischen die Zähne greifen kann, um so die Verbindungsmittel zum Getriebe lösen zu können. Vorzugsweise sind die Muttern am Getriebe für die Verschraubung von Getriebe mit der Flexplatte getriebeseitig angeschweißt, so dass ein Gegenhaltewerkzeug nicht benötigt wird.

Die Montage im Servicefall erfolgt dann analog in umgekehrter Reihenfolge zur Demontage. Hierbei befinden sich alle Komponenten bis auf das Getriebe bereits motorseitig vormontiert bzw. positioniert. Es folgen ein Heranführen des Getriebes und eine Verschraubung von Getriebe mit dem Adapterverbindungsmittel analog zum Lösen der Verschraubung bei der Demontage. Anschließend erfolgt ein Zusammenschieben des Triebstranges und Verschraubung von Rotorträger mit dem Schwungrad über eine rückseitige Öffnung im Schwungradgehäuse.

Weitere Einzelheiten und Vorteile der Erfindung werden im Folgenden unter Bezug auf die beigefügten Zeichnungen beschrieben. Es zeigen:
- Fig. 1A und 1B: eine Explosionsdarstellung eines Antriebsstrangmoduls gemäß einem nicht beanspruchten Beispiel;
- Figur 2: einen vormontierten Zustand des Antriebsstrangmoduls gemäß einem nicht beanspruchten Beispiel;
- Figur 3: einen montierten Zustand des Antriebsstrangmoduls gemäß einem nicht beanspruchten Beispiel;
- Figur 4: einen beispielhaften Demontagevorgang im Servicefall gemäß einem nicht beanspruchten Beispiel;
- Figur 5: einen vergrößerten Ausschnitt der Führung des Rotorträgers auf der Abstützeinrichtung gemäß einem nicht beanspruchten Beispiel;
- Figur 6: das ausgebaute Getriebe und die verbleibende Baugruppe des Antriebsstrangmoduls gemäß einem nicht beanspruchten Beispiel;
- Figur 7: einen Rotor mit einem alternativen Adapterverbindungselement;
- Figur 8: ein Antriebsstrangmodul gemäß einem erfindungsgemäßen Ausführungsbeispiel im montierten Zustand; und
- Figur 9: das Ausführungsbeispiel der Figur 8 mit auf der Abstützeinrichtung verschobenem Rotor.

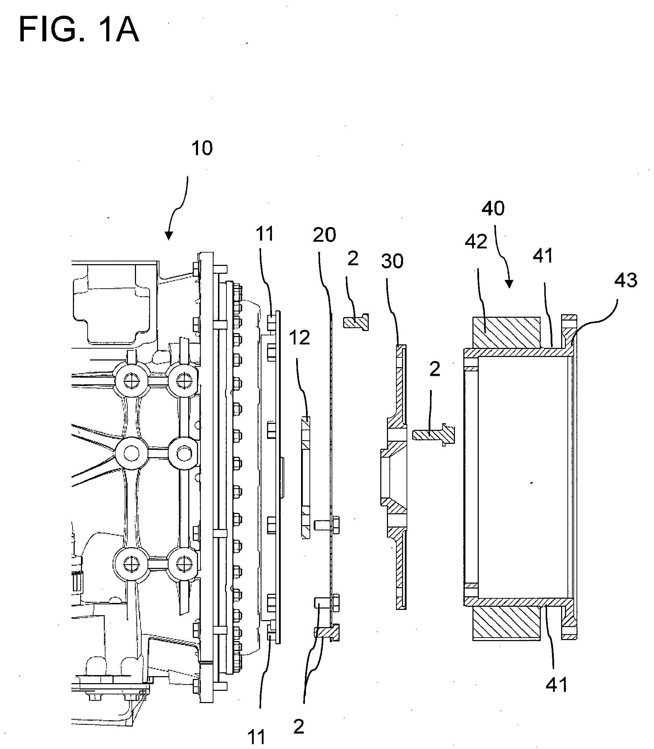

Figur 1A zeigt eine Explosionsdarstellung der einzelnen Bauteile des Antriebsstrangmoduls gemäß einem nicht beanspruchten Beispiel. Das Antriebsstrangmodul umfasst im vorliegenden Beispiel eine erste Baugruppe, umfassend ein Getriebe 10, beispielsweise ein Automatikgetriebe, eine Druckplatte 12, eine sogenannte Flexplatte 20, ein Adapterelement 30, und einen Rotor 40. Die in Figur 1A gezeigte erste Baugruppe wird bei dem erstmaligen Zusammenbau des Antriebsstrangmoduls vormontiert.

Hierbei wird der Adapter 30 am Rotorträger 41 montiert. Anschließend wird die Flexplatte 20 am Adapter 30 positioniert und auf den Adapter 30 aufgeschoben. Danach wird die Druckplatte 12 getriebeseitig auf die Flexplatte 20 aufgeschoben und die Baugruppe über ein Gewinde in der Druckplatte 12 verschraubt. Schließlich wird die so vormontierte Baugruppe mittels der Schrauben 2 über die Flexplatte 20 an dem Getriebe 10 verschraubt. Die hierzu vorgesehenen Muttern 11 am Getriebe 10, über die die Flexplatte 20 am Getriebe 10 verschraubt wird, sind getriebeseitig angeschweißt, so dass ein Gegenhaltewerkzeug nicht benötigt wird.

Der Rotor 40 umfasst einen Rotorträger 41, der hohlzylinderförmig ausgebildet ist und auf dem umfangsseitig die Rotorzähne 42 im Form eines Zahnkranzes angeordnet sind. Der Rotorträger 41 weist schwungradseitig ein sich in radialer Richtung erstreckendes Flanschelement 43 auf, um den Rotorträger mit dem Schwungrad 80 zu verschrauben. Die in Figur 1A gezeigte erste Baugruppe ist an sich aus dem Stand der Technik bekannt und muss hier nicht weiter beschrieben werden.

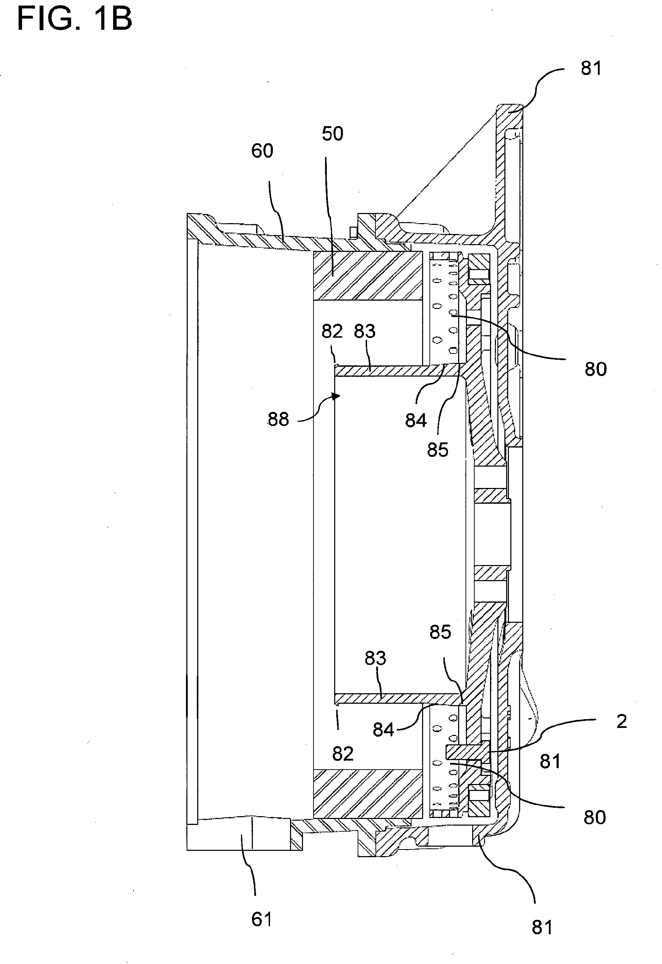

Figur 1B zeigt eine zweite Baugruppe des Antriebsstrangmoduls. Diese umfasst das Kurbelwellen-Startergenerator-Gehäuse (KSG-Gehäuse) 60, an dessen Innenseite der Stator 50 des Kurbelwellen-Startergenerators ortsfest angeordnet ist. Das KSG-Gehäuse 60 ist im Wesentlichen hohlzylinderförmig ausgebildet, wobei der Stator 50 nur in einer schwungradseitigen Hälfte des KSG-Gehäuses 60 angeordnet ist. Die getriebeseitige Hälfte des KSG-Gehäuses 60, an deren Innenseite somit der Stator 50 nicht angeordnet ist, enthält an einer Stelle einen Durchbruch 61, dessen Sinn und Zweck nachfolgend noch detaillierter erläutert wird.

Die in Figur 1B gezeigte zweite Baugruppe enthält ferner das mit der Kurbelwelle (nicht gezeigt) bewegungskoppelbare Schwungrad 80, das in einem Schwungradgehäuse 81 aufgenommen ist.

Gemäß dem vorliegenden Beispiel weist das Schwungrad 80 eine Abstützeinrichtung 88 mit einem zylinderförmigen Steg 83 auf, der sich getriebeseitig in Axialrichtung erstreckt. Der zylinderförmige Steg 83 ist direkt an das Schwungrad 80 angegossen.. Die in Figur 1A gezeigte erste Baugruppe und die in Figur 1B gezeigte zweite Baugruppe werden bei der Erstmontage im Werk separat vormontiert.

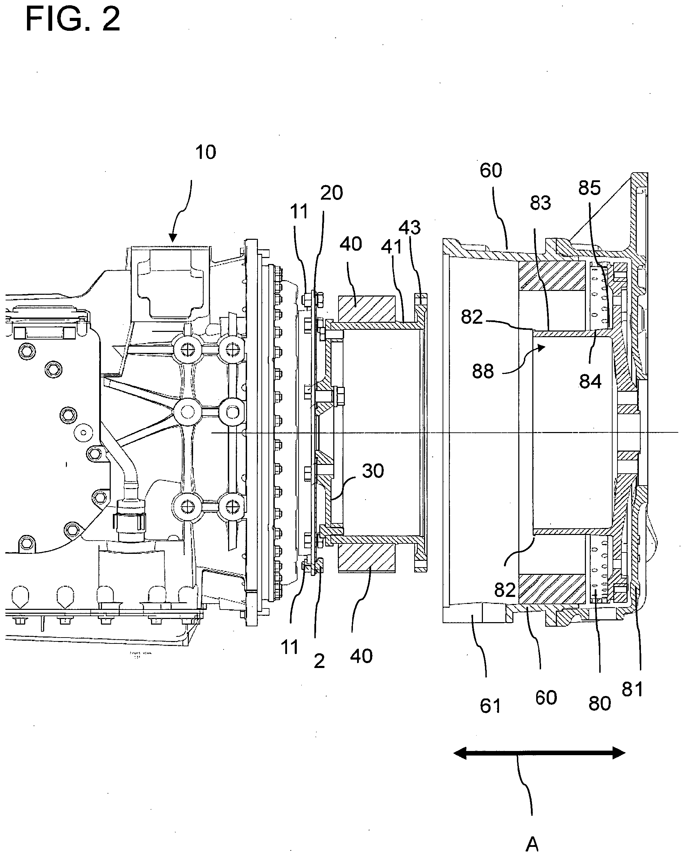

Ein solcher Vormontagezustand ist in der Figur 2 gezeigt. Nach der Vormontage werden die beiden Baugruppen zusammengeführt, indem der Rotorträger 41 in Axialrichtung A auf den Steg 83 aufgesteckt wird. Hierzu ist der Durchmesser des zylinderförmigen Steges 83 etwas kleiner als der Durchmesser des Rotorträgers 41 ausgebildet. Der Rotorträger wird solange entlang des Steges 83 in Axialrichtung verfahren, bis der Rotorträger 41 am Ende der Abstützeinrichtung 88 anschlägt und in einer vorbestimmten Betriebsposition positioniert wird. Hierbei sind die Längsabmessungen des Steges 83 und des Rotorträgers 41 so aufeinander abgestimmt, dass die Rotorzähne in der Betriebsposition gegenüberliegend zum Stator 50 positioniert werden und einen vorbestimmten Abstand zu diesem einnehmen. Weiterhin sind die Durchmesser des Rotors 40 und des Stators 50 so aufeinander abgestimmt, dass beim axialen Aufschieben eine Kollision des Rotors 40 mit dem Stator 50 vermieden wird.

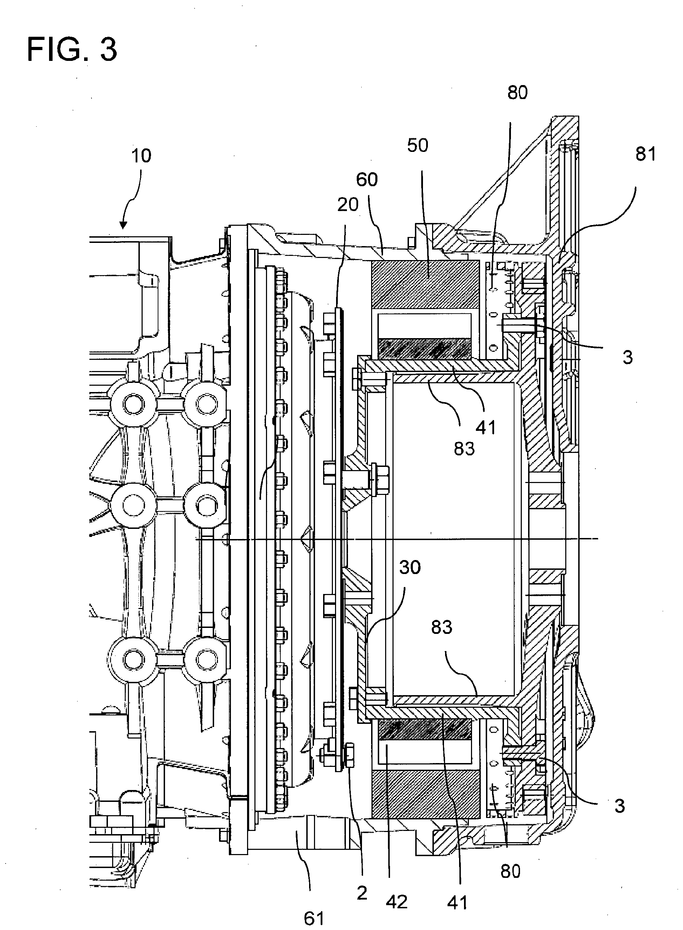

Der zusammengebaute Zustand ist in Figur 3 dargestellt. Nach dem Zusammenführen der beiden Baugruppen wird über eine rückseitige Öffnung im Schwungradgehäuse 81 der Rotorträger mit dem Schwungrad über die Schrauben 3 verschraubt. Hierzu sind im Rotorträger 41 entsprechende Gewinde zur Aufnahme der Schrauben 3 vorgesehen. Die Schrauben 3 klemmen das Schwungrad 80 an den Rotorträger 41, um die beiden Elemente drehfest miteinander zu koppeln. Das Schwungrad wird zusätzlich über Zylinderschrauben an der Kurbelwelle verschraubt (nicht gezeigt). Figur 3 zeigt weiterhin, dass sich im montierten Zustand die Rotorzähne in einer vorbestimmten Position zum Stator 50 befinden und zu diesem einen vorbestimmten Abstand aufweisen.

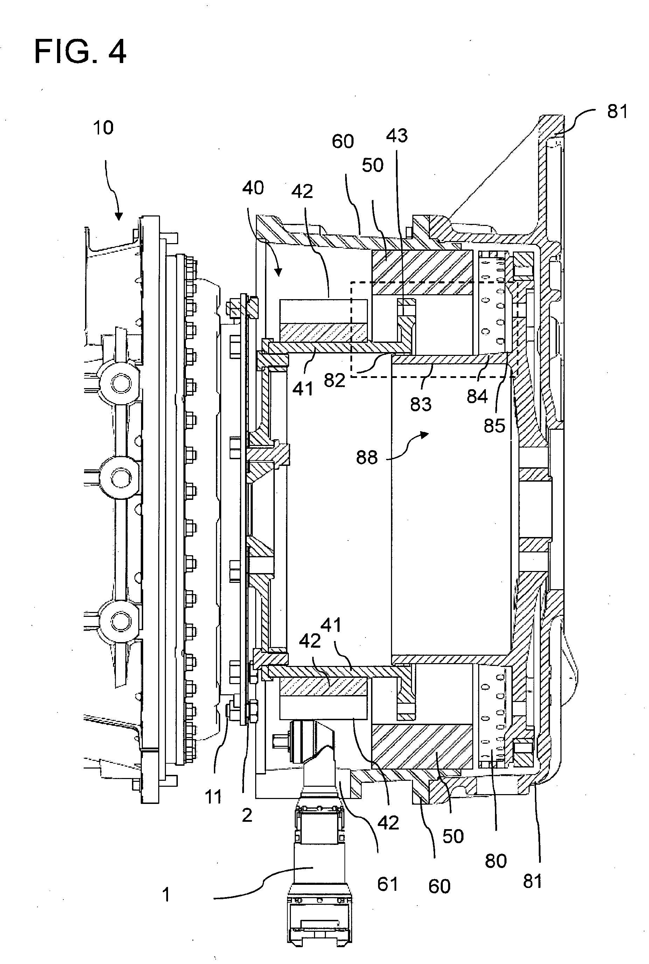

In Figur 4 ist die Demontage des Getriebes im Servicefall illustriert. Hierbei wird zuerst die in Figur 3 gezeigte Befestigung zwischen Rotorträger 41 und dem Schwungrad 80 durch Lösen der Schrauben 3 gelöst.

Anschließend wird der Rotorträger 41 vom Schwungrad 80 axial "abgezogen". Mit anderen Worten werden der Rotor mit dem Rotorträger und die in Figur 1B gezeigte zweite Baugruppe teleskopartig auseinander gezogen, wobei der Rotorträger 41 auf dem Steg 83 in Axialrichtung verschoben wird. Hierbei ist der Rotorträger 41 stets auf dem Steg 83 des Schwungrades 80 abgestützt. Die Länge des Steges 83 ist so bemessen, dass der Rotorträger in eine in der Figur 4 gezeigte Stellung verfahrbar ist, in der der Zahnkranz 42 des Rotors 40 nicht mehr unterhalb des Stators 50 positioniert ist, sondern unterhalb des Durchbruchs 6, der in das KSG-Gehäuse 60 eingebracht ist.

In diesem in Figur 4 gezeigten auseinander gezogenen Stellung wird die Werkzeugzugänglichkeit zu der Verschraubung 2 der Flexplatte 20 mit dem Getriebe 10 durch den Stator 50 nicht mehr behindert. Durch Einbringen eines Schraubwerkzeuges 1 in den Durchbruch 61 können die Schrauben 2 gelöst werden. Durch Verdrehen des Getriebes 10 werden alle Schrauben 2 nacheinander vor dem Schraubwerkzeug 1 positioniert und durch dieses gelöst. Anschließend kann das Getriebe 10 entfernt werden. Zur maximalen Bauraumausnutzung kann die Verschraubung von Flexplatte 20 und Getriebe 10 zu den Rotorzähnen 42 so positioniert werden, dass das Werkzeug 1 zwischen die Zähne 42 greifen kann, was in der Stellung in Figur 4 gezeigt ist.

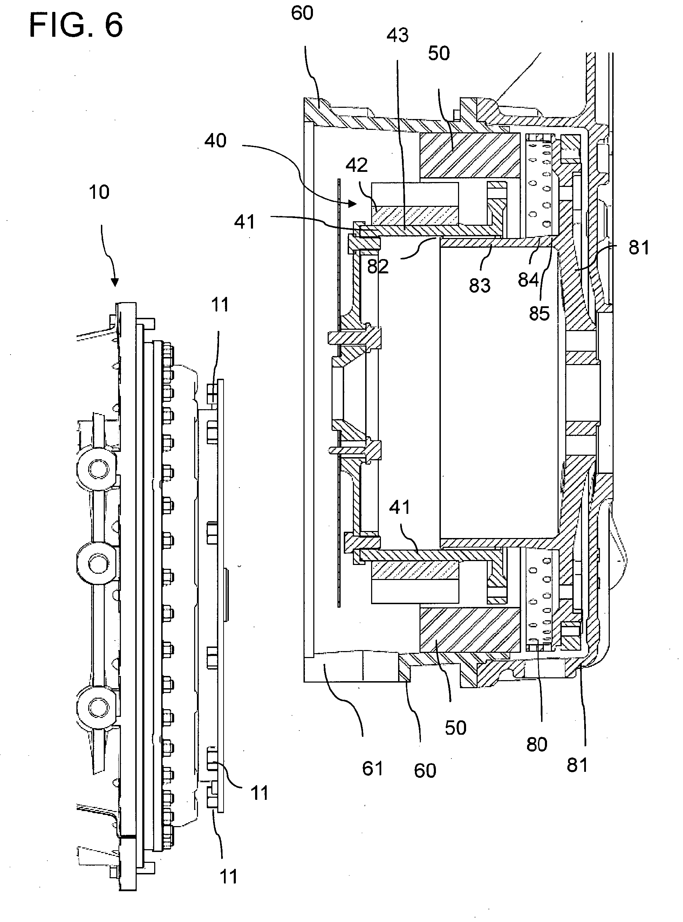

Es ist ferner zu erwähnen, dass die Montage im Servicefall entsprechend analog in umgekehrter Reihenfolge zu der eben beschriebenen Demontage erfolgt. Hierbei befinden sich alle Komponenten bis auf das Getriebe 10 motorseitig vormontiert bzw. positioniert. Dies ist in Figur 6 dargestellt. Anschließend wird das Getriebe herangeführt und mit der Flexplatte 20 verschraubt. Anschließend erfolgt ein Zusammenschieben des Triebstranges und die Verschraubung von Rotorträger 41 und dem Schwungrad 80 über die rückseitige Öffnung im Schwungradgehäuse 81 mittels der Schrauben 3.

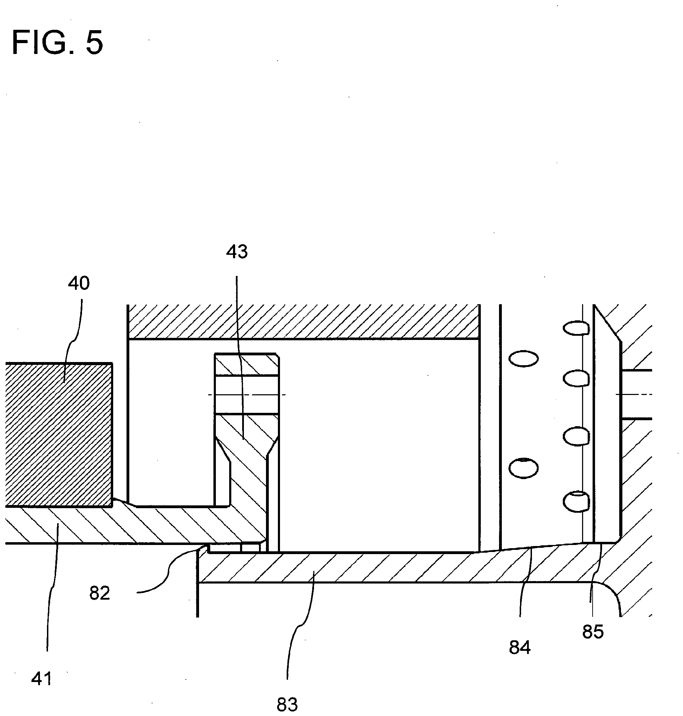

Figur 5 zeigt einen vergrößerten Ausschnitt des mit gestrichelten Linien gekennzeichneten Bereichs der Figur 4, um die Ausgestaltung des Steges und die Lagerung des Rotorträgers 41 auf dem Steg 83 zu illustrieren. Gemäß der in Figur 5 gezeigten Variante weist der Steg 83 in seinem getriebeseitigen Endbereich eine punktuelle oder linienförmige Auflage bzw. Vorsprung 82 auf. Der daraus resultierende Gesamtdurchmesser des zylinderförmigen Stegs wird so gewählt, dass beim Zusammenführen der Rotor 40 nicht mit dem Stator 50 kollidiert. Nach der Auflage 82 weist der Steg 83 eine Verjüngung in seinem anschließenden mittleren Bereich auf, um ein Verkanten des Rotorträgers 41 zu verhindern. Weiterhin stellen die unterschiedlichen Durchmesser sicher, dass der Reibwiderstand beim Aufschieben verringert ist. Im gegenüber liegenden Endbereich, d. h. schwungradseitigen Endbereich, des Steges 83 befindet sich eine Abschrägung 84. Dadurch wird der Rotorträger 41 bei Zusammenbau des Antriebsstrangmoduls auf eine Passfläche 85 geführt. Die Passfläche dient zur genauen Einhaltung des Abstandes zwischen Rotor 40 und Stator 50.

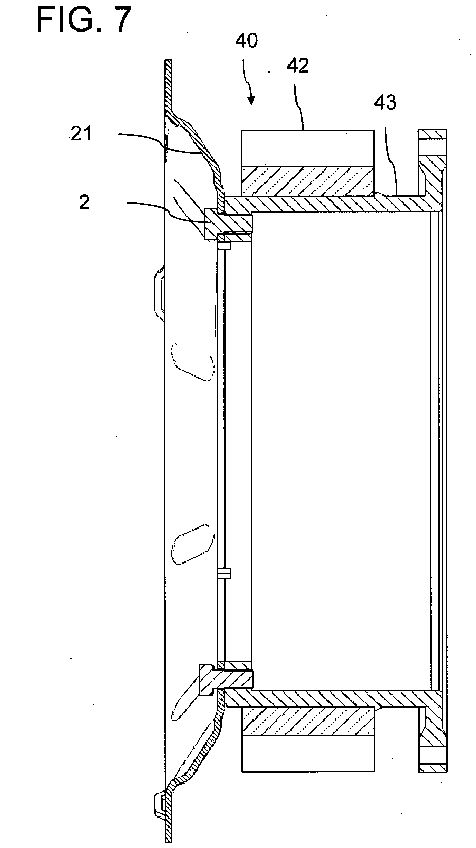

Figur 7 zeigt eine alternative Variante des Rotors 40, an dem anstelle der Flexplatte 20 ein tellerförmiger Adapter 21 zur Befestigung des Rotors 40 am Getriebe 10 vorgesehen ist. Durch den modularen Aufbau des Rotorträgers 41 kann dieser daher an unterschiedliche konstruktive Ausführungen des Getriebes 10 angepasst werden.

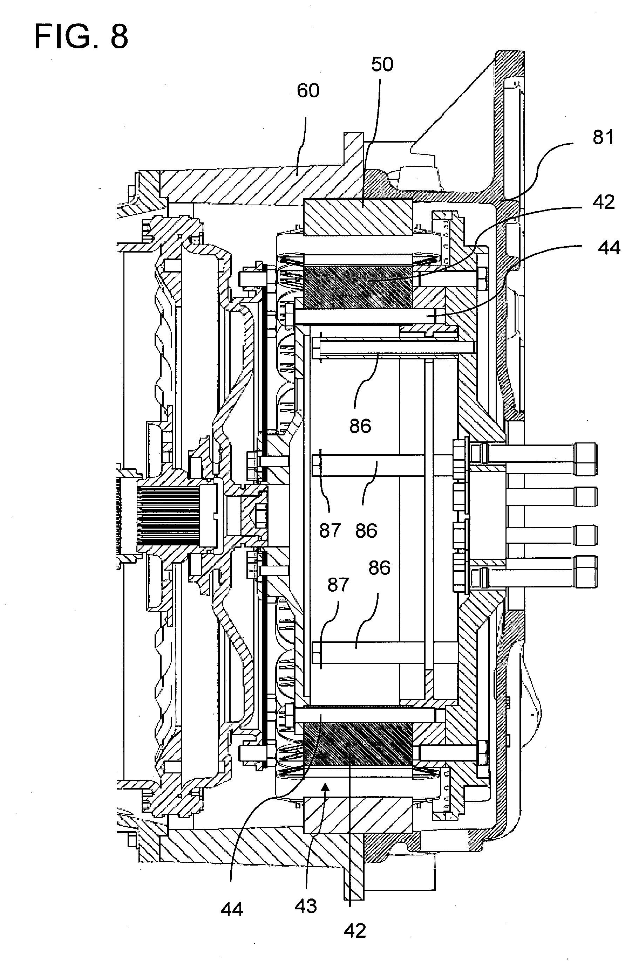

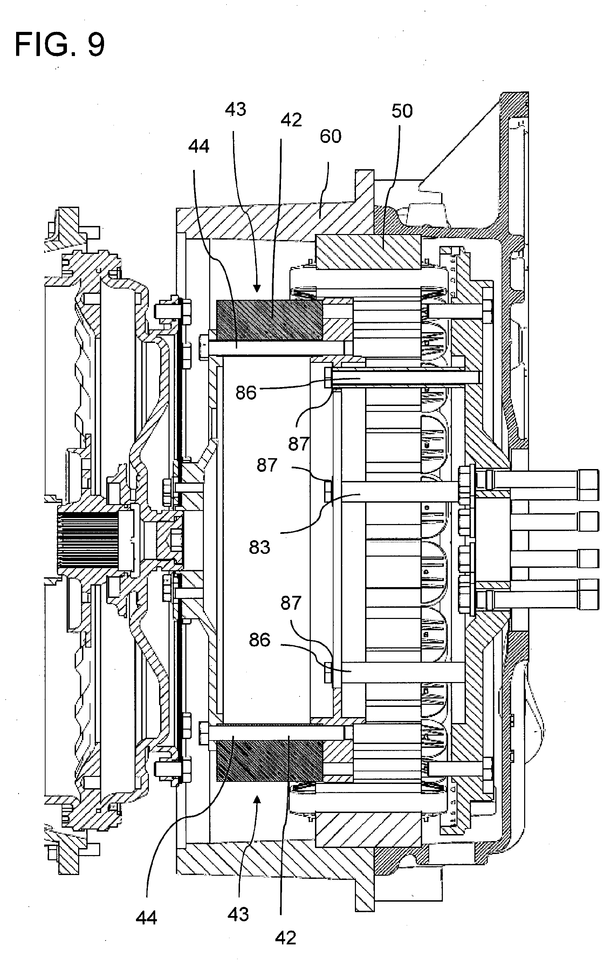

Die Figuren 8 und 9 zeigen eine Abwandlung des nicht beanspruchten Beispiels gemäß der vorangegangenen Figuren, so dass zur Vermeidung von Wiederholungen auf die vorstehende Beschreibung verwiesen wird, wobei für entsprechende Einzelheiten dieselben Bezugszeichen verwendet werden. Eine Besonderheit dieses erfindungsgemäßen Ausführungsbeispiels besteht darin, dass anstelle des zylinderförmigen Steges nun gehülste Schrauben 86 als Abstützeinrichtung für den Rotor 40 am Schwungrad 80 verschraubt sind. Die Hülse der Schrauben 86 dient als Klemmelement und gleichzeitig als Rutschsicherung, so dass der Rotor 40 bei der Demontage nicht seitlich herunterfällt. Die Schraubenhülse enthalt hierzu einen Bund 87, der als Sicherung dient, damit beim axialen Auseinanderziehen der Rotor 40 vom Rotorträger 41 nicht herunterfällt. Gemäß dieser Ausführungsvariante sind vier derartige Schrauben 86 entlang einer Kreislinie angeordnet und erstrecken sich parallel zueinander in axialer Richtung. Es kann auch eine Abstützeinrichtung mit weniger stabförmigen Abstützelementen, z. B. Schrauben 86, realisiert sein. Ferner können jedoch auch noch mehr derartige schraubenförmige 86 oder allgemein stabförmige Abstützelemente vorge sehen sein, um unabhängig von der Position des Motors einen Ausbau zu ermöglichen. Weiterhin ist in diesem Ausführungsbeispiel der Rotorträger 41 nicht durchgängig, d. h. der Rotor wird in diesem Fall nicht aufgepresst, sondern mittels Schrauben 44 befestigt.

Obwohl die Erfindung unter Bezugnahme auf bestimmte Ausführungsbeispiele beschrieben worden ist, ist eine Vielzahl von Varianten und Abwandlungen möglich, die ebenfalls von dem Erfindungsgedanken Gebrauch machen und deshalb in den Schutzbereich fallen. Insbesondere kann die Abstützeinrichtung konstruktiv unterschiedlich ausgestaltet sein in Abhängigkeit des verwendeten Rotors bzw. Rotorträgers, um eine Abstützung und axiale Führung des Rotors zu ermöglichen. Folglich soll die Erfindung nicht auf die offenbarten bestimmten Ausführungsbeispiele begrenzt sein, sondern die Erfindung soll alle Ausführungsbeispiele umfassen, die in den Bereich der beigefügten Patentansprüche fallen.

### Bezugszeichenliste

- 1: Schraubwerkzeug
- 2, 3: Schraube
- 10: Getriebe
- 11: Mutter
- 12: Druckplatte
- 20: Flexplatte
- 21: Getriebeadapter
- 30: Adapter
- 40: Rotor
- 41, 44: Rotorträger
- 42: Rotorzähne
- 43: Steg
- 50: Stator
- 51: Statorwicklungen
- 52: Formschlusselement
- 53: Schraube
- 60: KSG-Gehäuse
- 61: Gehäuseöffnung
- 80: Schwungrad
- 81: Schwungradgehäuse
- 82: Vorsprung
- 83: Abstützfläche
- 84: Schräge
- 85: Passfläche
- 86: Abstützschraube
- 87: Bund
- 88: Abstützeinrichtung
- A: axiale Richtung

## Patentansprüche

1. Antriebsstrangmodul für ein Kraftfahrzeug, umfassend
ein Schwungrad (80) mit einem Schwungradgehäuse (81); und
einen Kurbelwellen-Startergenerator (KSG), der antriebsseitig an dem Schwungradgehäuse (81) und abtriebsseitig an einem Getriebe (10) ortsfest anordenbar ist, wobei ein Rotor (40) des Kurbelwellen-Startergenerators mit dem Schwungsrad (80) lösbar drehfest koppelbar ist; wobei am Schwungrad (80) eine sich abtriebsseitig in axialer Richtung (A) erstreckende Abstützeinrichtung (88) befestigt ist, entlang derer der Rotor (40) in axialer Richtung (A) verschiebbar ist, wenn der Rotor (40) von dem Schwungrad (80) gelöst ist,
**dadurch gekennzeichnet, dass** die Abstützeinrichtung (88) sich in axialer Richtung (A) erstreckende stabförmige Führungselemente zur Abstützung des Rotors (40) umfasst, entlang derer der Rotor (40) in axialer Richtung (A) verschiebbar ist.

2. Antriebsstrangmodul nach Anspruch 1, **dadurch gekennzeichnet, dass** ein Rotorträger (41) auf die Abstützeinrichtung (88) aufgesteckt ist, so dass die Rotorzähne (42) die Abstützeinrichtung (88) in radialer Richtung umgeben.

3. Antriebsstrangmodul nach Anspruch 1 oder 2, **dadurch gekennzeichnet, dass** die stabförmigen Führungselemente als Stege, Schrauben (86) und/oder Stifte ausgeführt sind.

4. Antriebsstrangmodul nach Anspruch 3, **dadurch gekennzeichnet, dass** mindestens vier der Stege, Schrauben (86) und/oder Stifte vorgesehen sind, auf denen der Rotorträger abgestützt und beweglich geführt ist.

5. Antriebsstrangmodul nach einem der Ansprüche 3 oder 4, **dadurch gekennzeichnet, dass** der Rotor (40) auf einer die Schrauben (86) umgebenden Hülse verschiebbar gelagert ist.

6. Antriebsstrangmodul nach einem der vorhergehenden Ansprüche, **gekennzeichnet durch**
a) ein Adapterverbindungsmittel (20; 21), über das der Kurbelwellen-Startergenerator mit dem Getriebe (10) verschraubbar ist; und
b) ein Gehäuse (60) des Kurbelwellen-Startergenerators, das eine Öffnung (61) aufweist, über die ein Schraubwerkzeug (1) zur Betätigung der Schrauben (2), über die das Adapterverbindungsmittel (20; 21) mit dem Getriebe (10) verschraubbar ist, in das Gehäuse (60) des Kurbelwellen-Startergenerator einführbar ist.

7. Antriebsstrangmodul nach Anspruch 6, **dadurch gekennzeichnet,**
a) **dass** ein Stator (50) ortsfest an der Innenseite des Gehäuses (60) angeordnet ist; und
b) **dass** die Öffnung (61) in der vom Schwungrad entgegengesetzten Richtung versetzt vom Stator (50) vorgesehen ist, und dass durch ein Verschieben des Rotors (40) in axialer Richtung (A) auf der Abstützeinrichtung (88) wenigstens einer der Zähne (42) des Rotors (40) unterhalb der Öffnung (61) positionierbar ist.

8. Antriebsstrangmodul nach Anspruch 6 oder 7, **dadurch gekennzeichnet, dass** das Adapterverbindungsmittel (20; 21) ein scheibenförmiges Verbindungsmittel, insbesondere eine Flexplatte (20) oder eine starre Platte oder ein tellerförmiges Adapterelement (21) ist.

9. Antriebsstrangmodul nach einem der vorhergehenden Ansprüche, **dadurch gekennzeichnet,**
a) **dass** die Abstützeinrichtung (88) an einem dem Schwungrad (80) abgewandten Endbereich einen Vorsprung (82) in Richtung des Rotors (40) aufweist; und/oder
b) **dass** ein sich in axialer Richtung (A) erstreckende Teil (83) der Abstützeinrichtung (88) an einem dem Schwungrad (80) abgewandten Endbereich einen größeren Durchmesser aufweist als in einem sich anschließendem mittleren Bereich.

10. Antriebsstrangmodul nach einem der vorhergehenden Ansprüche, **dadurch gekennzeichnet, dass** ein sich in axialer Richtung (A) erstreckender Teil der Abstützeinrichtung (88) an einem dem Schwungrad (80) zugewandten Endbereich eine Schräge (84) mit einer anschließenden Passfläche (85) aufweist.

11. Montageverfahren für ein Antriebsstrangmodul gemäß der Ansprüche 2 und 7, **gekennzeichnet durch** die Schritte:
a) Montieren einer ersten Baugruppe, umfassend den Rotor (40), den Rotorträger (41), ein Adapterverbindungsmittel (20, 21) und ein Getriebe (10), wobei der Rotorträger über das Adapterverbindungsmittel (20; 21) ortsfest am Getriebe (10) angeordnet wird;
b) Montieren einer zweiten Baugruppe, umfassend das Kurbelwellengeneratorgehäuse (60), den Stator (50), das Schwungrad (80) und das Schwungradgehäuse (81), die an einem Motor montiert werden; und
c) Zusammenführen der montierten ersten und zweiten Baugruppen, wobei der Rotorträger auf der Abstützeinrichtung (88) in Richtung des Schwungradsgehäuses (81) verschoben wird und über eine rückseitige Öffnung im Schwungradgehäuse (81) das Schwungrad (80) am Rotorträger befestigt, vorzugsweise verschraubt, wird.

12. Demontageverfahren für ein Antriebsstrangmodul gemäß der Ansprüche 2 und 7, **gekennzeichnet durch** die Schritte:
a) Lösen der Verbindung, insbesondere Verschraubung, von Rotorträger (41) und Schwungrad (80) über eine rückseitige Öffnung im Schwungradgehäuse (81);
b) Auseinanderziehen von Rotor (40) und Schwungrad (80) **durch** Verschieben des Rotors (40) in axialer Richtung (A) auf der Abstützeinrichtung (88) in einen Zustand, bei dem der Rotor (40) versetzt von dem Stator (50) auf der Abstützeinrichtung (88) gelagert ist;
c) Einbringen eines Werkzeugs **durch** die Öffnung (61) im Gehäuse (60) des Kurbelwellen-Startergenerators und Verdrehen des Rotors (40) oder des Getriebes (10), um Befestigungsmittel, mittels derer das Adapterverbindungsmittel (20, 21) am Getriebe (10) befestigt ist, am Werkzeug (1) zu positionieren;
d) Lösen der positionierten Befestigungsmittel und Entfernen des Getriebes (10).

13. Demontageverfahren nach Anspruch 12, **dadurch gekennzeichnet, dass** die Befestigungsmittel Schrauben (2) sind und das Werkzeug ein Schraubwerkzeug (1) ist.

## Claims

1. Drivetrain module for a motor vehicle, comprising
a flywheel (80) with a flywheel housing (81); and
a crankshaft starter-generator (CSG) which can be arranged in a positionally fixed manner at the drive input side on the flywheel housing (81) and at the drive output side on a transmission (10), wherein a rotor (40) of the crankshaft starter-generator can be releasably rotationally conjointly coupled to the flywheel (80), wherein, to the flywheel (80), there is fastened a support device (88) which extends in an axial direction (A) at the drive output side and along which the rotor (40) is displaceable in the axial direction (A) when the rotor (40) is released from the flywheel (80),
**characterized in that** the support device (88) comprises bar-shaped guide elements which extend in the axial direction (A) and which serve for the support of the rotor (40) and along which the rotor (40) is displaceable in the axial direction (A).

2. Drivetrain module according to Claim 1, **characterized in that** a rotor carrier (41) is pushed onto the support device (88) such that the rotor teeth (42) surround the support device (88) in a radial direction.

3. Drivetrain module according to Claim 1 or 2, **characterized in that** the bar-shaped guide elements are configured as webs, screws (86) and/or pins.

4. Drivetrain module according to Claim 3, **characterized in that** at least four of the webs, screws (86) and/or pins are provided, on which the rotor carrier is supported and movably guided.

5. Drivetrain module according to either of Claims 3 and 4, **characterized in that** the rotor (40) is displaceably mounted on a sleeve that surrounds the screws (86).

6. Drivetrain module according to one of the preceding claims, **characterized by**
a) an adapter connection means (20; 21) by means of which the crankshaft starter-generator can be screwed to the transmission (10); and
b) a housing (60) of the crankshaft starter-generator, which housing has an opening (61) via which a screwing tool (1) for the actuation of the screws (2) by means of which the adapter connection means (20; 21) can be screwed to the transmission (10) can be inserted into the housing (60) of the crankshaft starter-generator.

7. Drivetrain module according to Claim 6, **characterized**
a) **in that** a stator (50) is arranged in a positionally fixed manner on the inner side of the housing (60); and
b) **in that** the opening (61) is provided offset with respect to the stator (50) in the opposite direction in relation to the flywheel, and in that, by means of a displacement of the rotor (40) in the axial direction (A) on the support device (88), at least one of the teeth (42) of the rotor (40) can be positioned below the opening (61).

8. Drivetrain module according to Claim 6 or 7, **characterized in that** the adapter connection means (20; 21) is a disc-shaped connection means, in particular a flex plate (20) or a rigid plate or a saucer-shaped adapter element (21).

9. Drivetrain module according to one of the preceding claims, **characterized**
a) **in that** the support device (88) has, on an end region facing away from the flywheel (80), a projection (82) in the direction of the rotor (40); and/or
b) **in that** a part (83), which extends in the axial direction (A), of the support device (88) has a larger diameter at an end region facing away from the flywheel (80) than in an adjoining central region.

10. Drivetrain module according to one of the preceding claims, **characterized in that** a part, which extends in the axial direction (A), of the support device (88) has, at an end region facing toward the flywheel (80), a slope (84) with an adjoining fitting surface (85).

11. Assembly method for a drivetrain module according to Claims 2 and 7, **characterized by** the steps:
a) assembling a first unit, comprising the rotor (40), the rotor carrier (41), an adapter connection means (20, 21) and a transmission (10), wherein the rotor carrier is arranged in a positionally fixed manner on the transmission (10) by way of the adapter connection means (20; 21);
b) assembling a second unit, comprising the crankshaft generator housing (60), the stator (50), the flywheel (80) and the flywheel housing (81), which are mounted on a motor; and
c) bringing the assembled first and second units together, wherein the rotor carrier is displaced on the support device (88) in the direction of the flywheel housing (81), and the flywheel (80) is fastened, preferably screwed, to the rotor carrier via an opening in the rear of the flywheel housing (81).

12. Disassembly method for a drivetrain module according to Claims 2 and 7, **characterized by** the steps:
a) releasing the connection, in particular screw connection, of rotor carrier (41) and flywheel (80) via a rear opening in the flywheel housing (81);
b) pulling rotor (40) and flywheel (80) apart by displacing the rotor (40) in the axial direction (A) on the support device (88) into a state in which the rotor (40) is mounted on the support device (88) so as to be offset with respect to the stator (50);
c) inserting a tool through the opening (61) in the housing (60) of the crankshaft starter-generator and rotating the rotor (40) or the transmission (10) in order to position fastening means, by which the adapter connection means (20, 21) is fastened to the transmission (10), at the tool (1);
d) releasing the positioned fastening means, and removing the transmission (10).

13. Disassembly method according to Claim 12, **characterized in that** the fastening means are screws (2), and the tool is a screwing tool (1).

## Revendications

1. Module de chaîne cinématique destiné à un véhicule automobile, ledit module comprenant
un volant d'inertie (80) comportant un boîtier de volant d'inertie (81) ; et
un générateur de démarreur de vilebrequin (KSG) qui peut être disposé de manière fixe du côté entraînement au niveau du boîtier de volant d'inertie (81) et du côté sortie au niveau d'une transmission (10), un rotor (40) du générateur de démarreur de vilebrequin pouvant être accouplé solidairement en rotation au volant d'inertie (80) de manière amovible ;
un dispositif de support (88), qui s'étend du côté de sortie dans la direction axiale (A), étant fixé au volant d'inertie (80), le rotor (40) pouvant être déplacé dans la direction axiale (A) le long du dispositif de support lorsque le rotor (40) du volant d'inertie (80) est desserré,
**caractérisé en ce que** le dispositif de support (88) comprend des éléments de guidage en forme de barre destinés à supporter le rotor (40), lesquels s'étendent dans la direction axiale (A) et le long desquels le rotor (40) peut coulisser dans la direction axiale (A).

2. Module de chaîne cinématique selon la revendication 1, **caractérisé en ce qu'**un support de rotor (41) est placé sur le dispositif de support (88) de sorte que les dents de rotor (42) entourent le dispositif de support (88) dans la direction radiale.

3. Module de chaîne cinématique selon la revendication 1 ou 2, **caractérisé en ce que** les éléments de guidage en forme de barre sont conçus sous forme de nervures, de vis (86) et/ou de tiges.

4. Module de chaîne cinématique selon la revendication 3, **caractérisé en ce qu'**au moins quatre des nervures, des vis (86) et/ou des tiges sont prévues qui permettent de supporter et guider de manière mobile le rotor.

5. Module de chaîne cinématique selon l'une des revendications 3 et 4, **caractérisé en ce que** le rotor (40) est monté de manière coulissante sur un manchon entourant les vis (86).

6. Module de chaîne cinématique selon l'une des revendications précédentes, **caractérisé par**
a) un moyen de liaison et d'adaptation (20; 21) permettant de visser le générateur de démarreur de vilebrequin à la transmission (10) ; et
b) un boîtier (60) du générateur de démarreur de vilebrequin qui comporte une ouverture (61) par laquelle un outil de vissage (1), destiné à actionner les vis (2) permettant de visser le moyen de liaison et d'adaptation (20; 21) à la transmission (10), peut être introduit dans le boîtier (60) du générateur de démarreur de vilebrequin.

7. Module de chaîne cinématique selon la revendication 6, **caractérisé en ce que**
a) un stator (50) est disposé de manière fixe du côté intérieur du boîtier (60) ; et
b) l'ouverture (61) est ménagée en étant décalée du stator (50) dans la direction opposée au volant d'inertie et **en ce que** au moins une des dents (42) du rotor (40) peut être positionnée au-dessous de l'ouverture (61) par coulissement du rotor (40) dans la direction axiale (A) sur le dispositif de support (88).

8. Module de chaîne cinématique selon la revendication 6 ou 7, **caractérisé en ce que** le moyen de liaison et d'adaptation (20; 21) est un moyen de liaison en forme de disque, en particulier une plaque flexible (20) ou une plaque rigide ou un élément adaptateur (21) en forme de plaque.

9. Module de chaîne cinématique selon l'une des revendications précédentes, **caractérisé en ce que**
a) le dispositif de support (88) comporte, au niveau d'une région d'extrémité opposée au volant d'inertie (80), une saillie (82) en direction du rotor (40) ; et/ou
b) une partie (83) du dispositif de support (88), laquelle s'étend dans la direction axiale (A), comporte un plus grand diamètre au niveau d'une région d'extrémité, opposée au volant d'inertie (80), que dans une région médiane se raccordant à celle-ci.

10. Module de chaîne cinématique selon l'une des revendications précédentes, **caractérisé en ce qu'**une partie du dispositif de support (88), laquelle s'étend dans la direction axiale (A), comporte au niveau de la région d'extrémité opposée au volant d'inertie (80), un biseau (84) pourvue une surface d'adaptation (85) se raccordant à celle-ci.

11. Procédé de montage d'un module de chaîne cinématique selon les revendications 2 et 7, **caractérisé par** les étapes suivantes :
a) monter un premier ensemble comprenant le rotor (40), le support de rotor (41), un moyen de liaison et d'adaptation (20, 21) et une transmission (10), le support de rotor étant disposé de manière fixe au niveau de la transmission (10) par le bais du moyen de liaison et d'adaptation (20 ; 21) ;
b) monter un deuxième ensemble comprenant le boîtier de générateur de vilebrequin (60), le stator (50), le volant d'inertie (80) et le boîtier de volant d'inertie (81) qui sont montés sur un moteur ; et
c) assembler les premier et deuxième ensembles montés, le support de rotor étant déplacé par coulissement sur le dispositif de support (88) en direction du boîtier de volant d'inertie (81) et le volant d'inertie (80) étant fixé, de préférence vissé, au support de rotor par une ouverture arrière ménagée dans le boîtier de volant d'inertie (81).

12. Procédé de démontage d'un module de chaîne cinématique selon les revendications 2 et 7, **caractérisé par** les étapes suivantes :
a) desserrer la liaison, en particulier la vis, du support de rotor (41) et du volant d'inertie (80) par une ouverture arrière ménagée dans le boîtier de volant d'inertie (81) ;
b) séparer le rotor (40) et le volant d'inertie (80) par coulissement du rotor (40) dans la direction axiale (A) sur le dispositif de support (88) dans un état dans lequel le rotor (40) est monté sur le dispositif de support (88) en étant décalé par rapport au stator (50) ;
c) introduire un outil par l'ouverture (61) ménagée dans le boîtier (60) du générateur de démarreur de vilebrequin et faire tourner le rotor (40) ou la transmission (10) pour positionner sur l'outil (1)des moyens de fixation à l'aide desquels le moyen de liaison et d'adaptation (20, 21) est fixé à la transmission (10) ;
d) desserrer les moyens de fixation positionnés et retirer la transmission (10).

13. Procédé de démontage selon la revendication 12, **caractérisé en ce que** les moyens de fixation sont des vis (2) et l'outil est un outil de vissage (1).
